# EUROPEAN PATENT APPLICATION

(11) **EP 1 777 609 A1**
(43) Date of publication of application: **25.04.2007**
(21) Application number: 05022141.5
(22) Date of filing: 11.10.2005
(51) Int. Cl.: G06F 3/023, H01H 13/84, H01H 13/83

(54) **Keypad for an electronic equipment and method for operating a keypad for an electronic equipment**

(71) Applicant: Sony Ericsson Mobile Communications AB, 221 88 Lund (SE)
(72) Inventor: Ahlberg, Björn, 231 96 Trelleborg (SE); Munther, Stefan, 168 38 Bromma (SE)
(74) Representative: Körber, Martin Hans

(57) **Abstract**

The present invention relates to a keypad for an electronic equipment comprising a plurality of keys (9), whereby a first value (11) is assigned to each of the keys (9) and a graphical design printed on the keys (9) for graphically marking a plurality of groups (10) of keys (9), whereby each group (10) comprises at least one key (9) and whereby a second value (12) is assigned to each group (10).

The present invention further relates to a method for operating a keypad for an electronic equipment.

## Description

### TECHNICAL FIELD OF THE INVENTION

The present invention relates to a keypad for an electronic equipment and to a method for operating a keypad for an electronic equipment. Specifically, the present invention relates to the problem of enabling a user of the electronic equipment to easily input alphabetic and numeric characters, symbols, and the like.

### DESCRIPTION OF RELATED ART

At present, most electronic equipment's for receiving information in a wireless communication system, such as mobile telephones, pagers, personal digital assistance, electronic organisers, and so forth, comprise a keypad for enabling the user of the electronic equipment to input alphabetic and numeric characters, symbols, and the like. The problem with keypads of small electronic equipment's is, that the keys itself are very small and that it is therefore difficult for the user to press the correct key without inadvertently pressing other keys.

Document US 6,310,608 B1 provides a keypad to make a computer more accessible for disabled users. In this keypad several keys are grouped together to form a compound key. Actuating any of the keys of the compound key results in the same input to the operating system or application programme. A representation of the keypad illustrating the key groupings active at a particular time and the input corresponding to each grouping may be displayed on the computers' display screen. Alternatively, a template laid over the keypad may be used to indicate the compound key groupings, particularly for applications in which the grouping does not change during the performance of a task.

The problem with the state of art is that it is not adapted to small consumer devices such as electronic equipments for wireless communication. The state of art uses a normal computer keyboard, where alphabetic and numeric characters are printed on different keys thereby occupying a large space on the keypad. A further disadvantage of the state of art is that the groups of keys cannot be easily recognised by the user. In case that the groups of keys are shown on the display the user for selecting the appropriat key has to look at the display and to transfer the scheme presented on the display to the keypad. Otherwise, if the groups of keys are shown by a template laid over the keypad, the user always has to bring the template with him and to put it on the keypad. Both cases are an uncomfortable way to showh the key groups to the user and make it difficult for the user to easily recognise the appropriate key.

The criterias for a good full QWERTY keypad are that it has to provide one key per charcter and that it should look like a full QWERTY keypad. On the other hand for a good phone keypad, i.e. for a good number keypad, fairly large keys are necessary that are easy to find and press. Further, a phone keypad should also provide one key per number and should also look like phone keypad to be easily recognized and used. In electronic equipments with a small size there is the necessitiy to provide a good full QWERTY keypad and at the same time a good number keypad.

### SUMMARY

The general problem with the state of the art keypads for electronic equipments as outlined above is that the keypads have to enable the input of any type of character or symbol, but at the same time have to occupy a small space of the electronic equipment. A further problem is that the user has to easily recognise the keys he has to press in order to input a certain value.

The object of the present invention is therefore to provide a keypad for an electronic equipment as well as a method for operating a keypad for an electronic equipment, which allow to use a keypad, which is small in space and at the same time allows an easy input of any type of characters or symbols.

The above-mentioned object is achieved by a keypad for an electronic equipment according to claim 1.

The keypad for an electronic equipment according to the present invention comprises a plurality of keys, whereby a first value is assigned to each of the keys and a graphical design printed on the keys for graphically marking a plurality of groups of keys, whereby each group comprises at least one key and whereby a second value is assigned to each group.

The above-mentioned object is further achieved by a method for operating a keypad for an electronic equipment according to claim 12.

The method for operating a keypad for an electronic equipment comprises the steps of providing a plurality of keys and assigning a first value to each of the keys and providing a graphical design printed on the keys for graphically marking a plurality of groups of keys, whereby each group comprises at least one key, and assigning a second value to each group.

Advantageously, the keypad can be operated in a first or a second operation mode, whereby in the first operation mode the first value assigned to each key is processed and in the second operation mode the second value assigned to each group is processed.

Preferably, in the first operation mode the first values are alphabetic characters and symbols.

Further preferably, in the second operation mode the second value are numeric characters.

The first or second operation mode can be either selected automatically or manually by a user.

In a preferred embodiment in the first operation mode pressing a key results in processing the assigned first value.

Advantageously, in the second operation mode pressing a first key of a group results in processing the second value assigned to said group.

Further advantageously, in the second operation mode when pressing a further key of the same group no value is processed if the first key and the further key of the same group have been pressed within a predefined time interval.

Preferably, in the second operation mode when pressing a further key of the same group the second value assigned to the group is processed if the first key and the further key of the same group have not been pressed within a predefined time interval.

Advantageously, in the first operation mode all keys are backlighted and in the second operation mode only the keys belonging to a group of keys are backlighted.

It should be emphasised that the term "comprises/comprising" when used in this specification is taken to specify the presence of stated features, integers, steps, or components, but does not preclude the presence or addition of one or more other features, integers, steps, components, or groups thereof.
In the context of the present application and the present invention, the term "electronic equipment for receiving information in a wireless communication system" includes any kind of portable radio communication equipment. The term "portable radio communication equipment" includes all equipment such as mobile telephones, mobile cellphones, pagers, personal digital assistance, communicators, i.e. electronic organisers, smart phones, or the like. The term "wireless communication system" relates to any kind of communication or telecommunication system which enables the wireless transfer of information.

### BRIEF DESCRIPTION OF THE DRAWINGS

In the following a preferred embodiment of the invention will be explained in more detail in relation to the enclosed drawings in which
Fig. 1 shows an example of the keypad for an electronic equipment according to the present invention,
Fig. 2 shows a block diagram of an example of an electronic equipment according to the present invention, and
Fig. 3 shows a flow chart of the process according to the method of the present invention.

### DETAILED DESCRIPTION OF EMBODIMENT

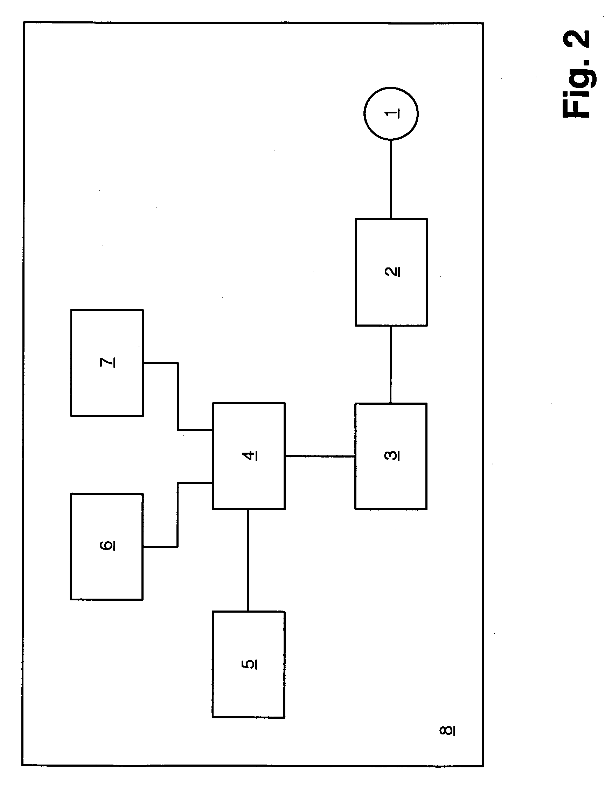

Fig. 2 shows a schematic block diagram of an example of an electronic equipment according to the present invention. The electronic equipment 8 is able to transmit and receive information in a wireless communication system, such as e.g. the UMTS, the GSM, or any other available wireless telecommunication system.

For the transmission and reception of wireless signals in the telecommunication system, the electronic equipment 8 comprises an antenna 1 which is connected to a transmitter/receiver means 2, which can e.g. be embodied as an high frequency (HF) unit in case of a GSM or a UMTS system. The transmitter/receiver means 2 is connected to a processing means, which is visualised in Fig. 2 as a processing block 3. The processing block 3 comprises the further processing means necessary for (de)modulating and/or (de)coding and so forth the received information signals depending on the wireless communication system in which the information signals are being transmitted and received. It is to be noted, that the electronic equipment 8 in practice comprises all necessary means and units to be operated in the respective wireless communication system. For the sake of clarity, Fig. 2 and the present description only show and relate to the functionality's which are necessary to understand the present invention.

The processing block 3 is connected to a central control unit 4, which can e.g. be embodied in a micro-processor, central processing unit or the like. The central control unit 4 controls the operation of the electronic equipment 8. The central control unit 4 is connected to a keypad 5, which enables the user to input numbers, characters, and symbols. The central control unit 4 is further connected to an output means 6 and an input means 7. The output means 6 can be a display, loudspeakers, or an interface for connecting the electronic equipment 8 to another device. In case that the electronic equipment 8 for example is a portable cellphone the output means 6 may be a display. The input means 7 in addition to the keypad 5 may comprise further means for the input of data and/or information, e.g. a touch-pad, recognition of speech or an interface for connecting the electronic equipment 8 to a further device. Each of the output means 6 and the input means 7 may consist of several components which each enable the output or input of data and/or information. The electronic equipment 8 further comprises a memory (not shown) for storing information and/or software code for the operation of the electronic equipment 8. The memory hereby is also connected to the central control unit 4.

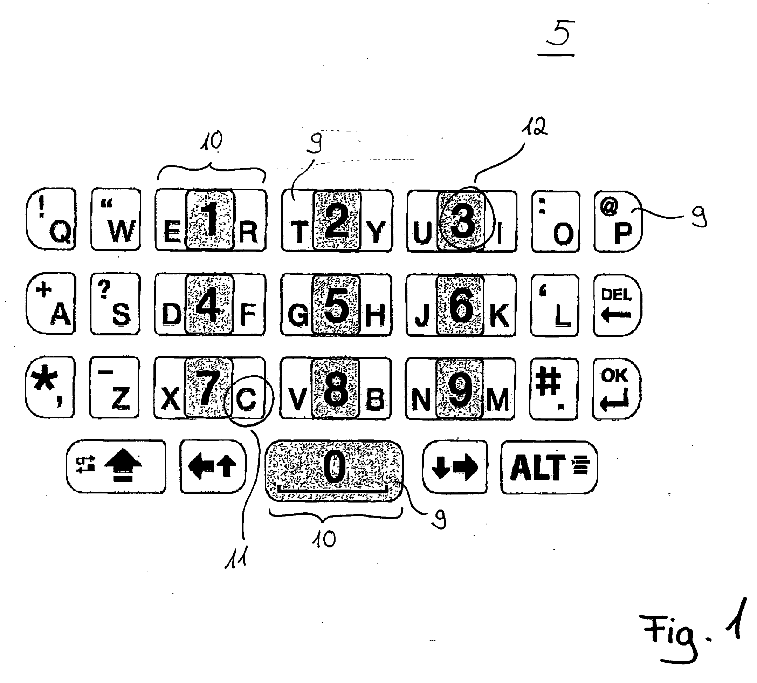

Fig. 1 shows a keypad 5 according to one embodiment of the present invention. The keypad 5 hereby comprises a plurality of keys 9. The keypad 5 can be operated either in a first operation mode or in a second operation mode. Hereby in the first operation mode to every key 9 a first value 11 is assigned. In the example according to Fig. 1 hereby the first values 11 are alphabetic characters and further symbols needed for the input of text. That means, in the first operation mode the keypad 5 can be operated as a full QWERTY keypad. If the keypad 5 is operated in the first operation mode then with the pressing of a key 9 the respective assigned first value 11, e.g. alphabetic characters, can be input and are further processed by the central control unit 4 of the electronic equipment 8. In the first operation mode to every single key 9 a single value or character is assigned.

In addition to the first operation mode the keypad 5 can also be operated in a second operation mode. Hereby, several keys 9 are composed to groups 10 of keys, whereby each group comprises at least one key. According to the embodiment as shown in Fig. 1 a group 10 of keys comprises two keys 9, i.e. each group comprises two of the full QWERY keypad keys. In the second operation mode to each group 10 of keys a second value 12 is assigned, so that pressing any key of the same group 10 of keys results in the same second value 12 that is input and processed.

Hereby, a graphical design is printed on the keypad showing the first values 11, the second values 12 and the groups 10 of keys. In the example as shown in Fig. 1 the first values 11, i.e. the alphabetic characters and other symbols needed for the input of text, and the second values 12, i.e. the numeric characters needed for the input of phone numbers or the like, are printed on the keypad. Hereby, the second values 12 are printed on the keypad in way to show the groups 10 of keys. In the embodiment as shown in Fig. 1 the numbers are printed on two adjacent keys 9. This shows, that for the second operation mode two adjacent keys 9 are composed to a group 10 of keys.

It is to be noted, that the number of keys 9 being composed to groups 10 of keys may be smaller than the total number of keys, i.e. there may be some keys 9 which are only used in the first operation mode and which have no assigned value in the second operation mode. When the keypad is in the second operation mode, then a pressing of such keys 9 having only an assigned first value 11 may not be processed in any way.

In order to enhance the two different operation modes of the keypad 5 the keys 9 can be illuminated, i.e. backlighted. If for instance the keypad 5 is operated in the first operation mode, then all keys 9 may be backlighted. Particularly, the first values 11 printed on the keypad 5 may be backlighted. If otherwise the keypad 5 is operated in the second operation mode then only the keys 9 being composed to groups 10 of keys 9 are backlighted, particularly the second values 12 printed on the keypad 5 are backlighted.

If the keypad 5 is operated in the first operation mode then with pressing of a key 9 an alphabetic character or a symbol is processed. For example when pressing the key with the alphabetic character "E" printed on it, then the character "E" will be processed. If the keypad 5 is operated in the second operation mode, then a pressing of the same key with the character "E" on it will result in an input and processing of the number "1" as the key with the character "E" is part of a group consisting of the keys with the characters "E" and "R" which has the assigned value "1".

It should be emphasised that the present invention is not limited to the embodiment as shown in Fig. 1. In contrast to the embodiment as shown in Fig. 1 it may be possible to compose only one or more groups consisting of one or even all keys 9. Further, the different groups may comprise different numbers of keys. The first value assigned to the keys when the keypad 5 is in the first operation mode may be alphabetic characters, numeric characters, symbols, or any other value. Same applies for the second value 12 assigned to the groups 10 of keys when the keypad 5 is in the second operation mode. Also the second value may be any type of alphabetic character, numeric character, symbols, or any other value.

With the graphical design printed on the keypad it is easy for the user to directly recognise the different values when inputting data or information. Further, with the present invention, it is possible to use the same key for the first operation mode as well as for the second operation mode. This results in less space needed for the keypad and at the same time allows the user to easily input characters or symbols on large keys.

As already explained in the second operation mode a pressing of any of the keys belonging to one group is processed as a valid input. That means that for example according to Fig. 1 in the second operation mode the number "1" can be input by either pressing the key "E" or the key "R". In order to avoid the case that the user inadvertently presses two keys of the same group at the same time, the following mechanism can be adopted by the central processing unit: If the first key of a group is pressed, then the respective second value is processed. If the pressing of a further key of the same group occurs, then the time between the pressing of the first and the further key of the same group is detected and if this time is smaller than a pre-defined time interval, then the pressing of the further key is filtered and not processed. The pre-defined time interval may be up to 0,5 seconds. Same applies for the case that one group 10 comprises more than two keys: After pressing a first key of a group 10 then any pressing of a further key of the same group 10 will not be processes as a valid input, if the pressing of the first key and the further key occur within the predefined time interval.

With this keypad and with this method a good full QWERTY keypad can be provided and at the same time a phone, i.e. a number keypad can be provided, where two or more keys are combined to large number keys and where the keys are placed and designed in a way, that the keypad looks like a phone keypad and that through the timer the group of keys act as one number key.

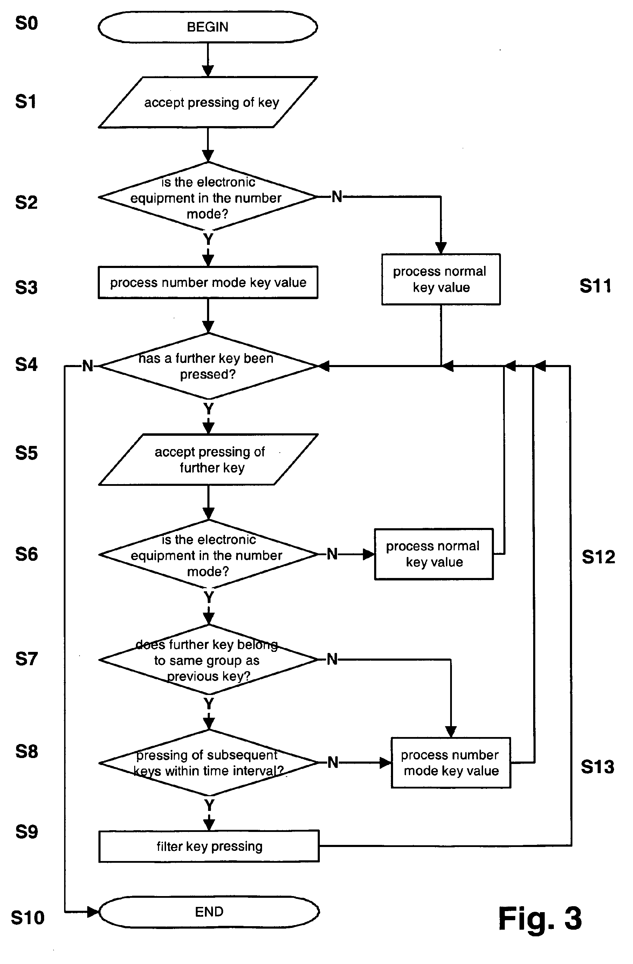

Fig. 3 shows a flow chart according to the method for operating a keypad according to the present invention. The process begins with step S0, e.g. with switching on the electronic equipment 8. In step S1 the electronic equipment accepts the pressing of a key of the keypad 5. In step S2 the electronic equipment checks if it is in the number mode, which would correspond to the second operation mode. If the electronic equipment 8 is not in the second operation mode then the normal key value, that is the first value 11 of the first operation mode is processed in step S 11. Otherwise if the electronic equipment is in the number mode then the second key value 12, that is the number assigned to the group 10 of keys is processed in step S3. The process then in any case goes on with step S4 where it is detected if a further key 9 has been pressed. If no further key has been pressed then the process ends in step S10. Otherwise if a further key has been pressed then in step S5 a further pressing of a key is accepted and in step S6 it is again checked if the electronic equipment 8 is in the number mode, that is in the second operation mode. If the electronic equipment 8 is not in the number mode then in step S12 a normal key value, that is the first value 11 according to the first operation mode is processed and the process turns back to step S4 where it is checked if a further key has been pressed. Otherwise if in step S6 it is decided that the electronic equipment is in the number mode then it is checked if the further key which has been pressed belongs to the same group 10 as the key previously pressed. If the further key which has been pressed does not belong to the same group as the previously pressed key then the second value assigned to the further key is processed, which according to the embodiment of the present invention would result in processing the number mode key value in step S 13. After the number mode key value has been processed the process goes on with step S4 where it is checked if a further has been pressed. Otherwise, if in step S8 it is decided that the pressing of the subsequent keys has been within the predefined time interval then in step S9 the pressing of the further key is filtered and is not processed. After the filtering of the key in step S9 the process goes back to step S4 where it is checked if a further key has been pressed. In any case the process ends with step S10 and all the values, which have been input until then and which have not been filtered, are processed.

## Claims

1. Keypad for an electronic equipment comprising
a plurality of keys (9), whereby a first value (11) is assigned to each of the keys (9) and a graphical design printed on the keys (9) for graphically marking a plurality of groups (10) of keys (9), whereby each group (10) comprises at least one key (9) and whereby a second value (12) is assigned to each group (10).

2. Keypad according to claim 1,
whereby the keypad (5) can be operated in a first or a second operation mode, whereby in the first operation mode the first value (11) assigned to each key (9) is processed and in the second operation mode the second value (12) assigned to each group (10) is processed.

3. Keypad according to claim 2,
whereby in the first operation mode the first values (11) are alphabetic characters and symbols.

4. Keypad according to claim 2 or 3,
whereby in the second operation mode the second values (12) are numeric characters.

5. Keypad according to any of claims 2 to 4,
whereby the first or second operation mode is either selected automatically or manually by a user.

6. Keypad according to any of claims 2 to 5,
whereby in the first operation mode pressing a key (9) results in processing the assigned first value (11).

7. Keypad according to any of claims 2 to 6,
whereby in the second operation mode pressing a first key (9) of a group (10) results in processing the second value (12) assigned to said group (10).

8. Keypad according to claim 7,
whereby in the second operation mode when pressing a further key (9) of the same group (10) no value is processed if the first key (9) and the further key (9) of the same group (10) have been pressed within a predefined time interval.

9. Keypad according to claim 7 or 8,
whereby in the second operation mode when pressing a further key (9) of the same group (10) the second value (12) assigned to the group (10) is processed if the first key (9) and the further key (9) of the same group (10) have not been pressed within a predefined time interval.

10. Keypad according to any of claims 2 to 9,
whereby in the first operation mode all keys (9) are backlighted and whereby in the second operation mode only the keys (9) belonging to a group (10) of keys (9) are backlighted.

11. Electronic equipment (1) with a keypad (5) according to any of the preceding claims.

12. Method for operating a keypad for an electronic equipment comprising
providing a plurality of keys (9) and assigning a first value (11) to each of the keys (9) and
providing a graphical design printed on the keys (9) for graphically marking a plurality of groups (10) of keys (9), whereby each group (10) comprises at least one key (9), and assigning a second value (12) to each group (10).

13. Method according to claim 12,
whereby the Method (5) can be operated in a first or a second operation mode, whereby in the first operation mode the first value (11) assigned to each key (9) is processed and in the second operation mode the second value (12) assigned to each group (10) is processed.

14. Method according to claim 13,
whereby in the first operation mode the first values (11) are alphabetic characters and symbols.

15. Method according to claim 13 or 14,
whereby in the second operation mode the second values (12) are numeric characters.

16. Method according to any of claims 13 to 15,
whereby the first or second operation mode is either selected automatically or manually by a user.

17. Method according to any of claims 13 to 16,
whereby in the first operation mode pressing a key (9) results in processing the assigned first value (11).

18. Method according to any of claims 13 to 17,
whereby in the second operation mode pressing a first key (9) of a group (10) results in processing the second value (12) assigned to said group (10).

19. Method according to claim 18,
whereby in the second operation mode when pressing a further key (9) of the same group (10) no value is processed if the first key (9) and the further key (9) of the same group (10) have been pressed within a predefined time interval.

20. Method according to claim 18 or 19,
whereby in the second operation mode when pressing a further key (9) of the same group (10) the second value (12) assigned to the group (10) is processed if the first key (9) and the further key (9) of the same group (10) have not been pressed within a predefined time interval.

21. Method according to any of claims 13 to 20,
whereby in the first operation mode all keys (9) are backlighted and whereby in the second operation mode only the keys (9) belonging to a group (10) of keys (9) are backlighted.
